# EUROPEAN PATENT APPLICATION

(11) **EP 4 656 610 A1**
(43) Date of publication of application: **03.12.2025**
(21) Application number: 24178631.8
(22) Date of filing: 28.05.2024
(51) Int. Cl.: C04B 28/02, C04B 28/16

(54) **AN INORGANIC BINDER COMPOSITION WITH FILLER**

(71) Applicant: ResourceFull BV, 3000 Leuven (BE)
(72) Inventor: DIQUELOU, Youen, 4000 Liège (BE); ARNOUT, Lukas, 3010 Kessel-Lo (BE); LAPAUW, Thomas, 3010 Kessel-Lo (BE); BHATT, Nehal Manoj, 3630 Maasmechelen (BE); FRANCOIS, Elise, 5652KA Eindhoven (NL); FILHO, José, 9000 Gent (BE)
(74) Representative: IPLodge bv

(57) **Abstract**

The present invention suggests an inorganic binder composition comprising a ladle furnace slag chemically comprising at least 25 wt% of CaO, at least 10 wt% of Al₂O₃, and a maximum of 25wt% of SiO₂, a CaSO₄ source, a retarding compound, a filler with a d_50 value between 1 µm and 25 µm, and water. Moreover, the present invention suggests a process for producing that inorganic binder composition and the use of that inorganic binder composition for forming a building product.

## Description

### Technical Field

The present invention relates to an inorganic binder composition comprising a ladle furnace slag chemically comprising at least 25 wt% of CaO, at least 10 wt% of Al₂O₃, and a maximum of 25 wt% of SiO₂, a CaSO₄-source, a retarding compound, a filler having a d_50 value between 1 µm and 25 µm, and water. Moreover, the present invention relates to a process for producing that inorganic binder composition and to the use of that inorganic binder composition for forming a building product.

### Background Art

The use of CaO-Al₂O₃ phases (calcium aluminate phases, 'CA') as cement constituent is known in the state of the art and there is a wide range of commercial products available on the market. One of the typical features of these CA cement types is the fact that, when mixed with water, they can result in a fast setting and hardening binder, resulting in a high production speed and a high economic value.

The production of CA cement is done at high temperatures, usually above 1300°C, and it often involves the melting or sintering of the compounds.

The combination of CA cement with CaSO₄-based compounds is also often used for applications where low or no shrinkage is required. The proper dosage of the CA cement and CaSO₄-based compounds is used for applications where no shrinkage is tolerated and prevents the needed for i.e. extra reinforcement or shrinkage joints.

The use of CA-rich binders in cementitious systems has been widely reported and suggested in literature, as described for example in WO2020141379A1. With reference to ES2891675B2, it is clear that CA-rich binders such as ladle furnace slag (LFS) can have hydraulic properties which provide a certain mechanical strength and can be combined with ordinary Portland cement (OPC) and some blast furnace slag (BFS). However, the challenge is to form a durable and robust binder without loss in strength after a certain period of time [Cement and Concrete Research 41 (2011) 865-571].

The combination of a ladle furnace slag with activators has been explored in order to overcome this issue. The use of alkali-activators showed an improvement in strength [Construction and Building Materials 123 (2016) 800-805]. The use of ladle furnace slag in combination with CaSO₄ has been documented [Construction and Building Materials 197 (2019) 143-151; Construction and Building Materials 127 (2016) 93-101; WO2023090878A1]. This can result in a more durable binder based on ettringite. However, the challenge lies with the consistency of the reactivity with water and quality of the residue in order to obtain high quality binders and construction materials with sufficient mechanical performance in an acceptable bandwidth of tolerance.

One challenge is the dimensional stability of the formed binder. Severe shrinkage due to the absence of anions such as SO₄²⁻ is detrimental for the usage of binders based on these types of residues. On the other hand, the dosage should be tuned to the amount and type of reactive CA-phases otherwise uncontrollable expansion can occur [Construction and Building Materials 127 (2016) 93-101]. Moreover, the stability of the formed binder and building products are crucial parameters for most construction materials, in particular for outdoor usage.

Furthermore, the use of CA-rich residues has been used as binder component in alkali-activated materials, as described in EP4174045A1. The use in combination with CaSO₄ as activator has, however, explicitly been mentioned as not useful due to the potential risk of 'undesirable expansion'.

### Problem statement

The use of CA cements know in the state of the art is limited due to the high costs and high ecological footprint that are associated with purity of the raw materials, the high Al₂O₃-content, higher energy consumption and higher production costs. Alternatives to CA cements have been sought.

Moreover, the use of the in literature suggested binders based on ladle furnace slag is limited due to dimensional stability challenge for higher quality binders. Whereas in conventional binder chemistry the lowering of the water/cement (w/c) ratio or water/binder (w/b) ratio allows the production of binders with higher strength and higher durability, this is not applicable for ladle furnace slag binders. The direct coupling between strength and durability, as assumed in most cases for i.e. OPC, is not valid for the presented binder system. A high compressive strength does not imply an excellent durability. This is because binders with lower w/b ratio turn out to be dimensionally unstable, in particular in environments with high humidity. Besides the use of the retarder can conflict with the functionality of the flow improving agent. The required dosage to control the setting time hampers an effective use of flow improving compounds. The objective underlying the present invention was to overcome these problems.

### Summary of the invention

The above-mentioned problems are solved with the features of the independent claims. The dependent claims pertain to preferred embodiments of the invention.

According to a first aspect, the present invention provides an inorganic binder composition comprising (A) a ladle furnace slag chemically comprising at least 25 wt% of CaO, at least 10 wt% of Al₂O₃, and a maximum of 25 wt% of SiOz, (B) a CaSO₄-source different from (A), (C) a retarding compound different from (A) and (B), (D) a filler with a d_50 value between 1 µm and 25 µm, different from (A), (B) and (C), and (E) water, wherein the ladle furnace slag is at least 15 wt% of the sum of (A)+ (B)+ (C) + (D), the weight ratio between the ladle furnace slag and the CaSO₄ source being in the range from 1:3 to 19:1, the weight ratio between the sum of the ladle furnace slag, the CaSO₄ source and the filler, i.e. ((A) + (B) + (D)), and the retarding compound (C) is at least 19:1, the filler being present as at least 10 wt% of the binder composition and at a maximum of 70 wt%, and the ratio of water to the sum of (A), (B), (C) and (D), i.e. the water to binder ratio (w/b), is limited to 0.40.

This inorganic binder composition contains water in low water/binder ratios which facilitates the usage of ladle furnace slag with CaSO₄ to form high quality building materials and construction products with good and reliable mechanical performance without jeopardizing the durability in terms of dimensional stability and water tolerance. Moreover, it allows for a reduction in the required amount of retarding compound which improves strongly the effectiveness of flow improving compounds and reduces the cost of the binder composition.

The present disclosure solves the aforementioned technical problems as it describes an inorganic binder composition with sufficient open time, low ecological footprint, affordable, good flowability and workability, good water stability and excellent mechanical strength at early and late age.

Advantageously, this improves the user-friendliness of the binder based on the ladle furnace slag residue.

According to a second aspect, the present invention provides a process for producing that inorganic binder composition, comprising the steps of (A) providing a ladle furnace slag, (B) providing a CaSO₄-source different from (A), (C) providing a retarding compound different from (A) and (B), (D) providing a filler with a d_50 value between 1 µm and 25 µm, different from (A), (B) and (C), providing water, and homogeneously mixing the ladle furnace slag, the CaSO₄-source, the retarding compound, the filler and the water.

"Homogeneously mixing", as this term is used herein, means that the standard deviation on the composition calculated on at least 10 randomly taken bulk samples of the inorganic binder composition is maximum 10% relative to the mean value. Samples that are not properly mixed tend to have undesired fresh properties and yield weak building products.

According to a third aspect, the present invention provides for the use of that inorganic binder composition, comprising combining the inorganic binder composition with aggregates to form a building product.

### Brief Description of the Drawings

Various technical effects and advantages of embodiments of the present invention will now be described with reference to the accompanying figures, in which "H" stands for hours and "D" stands for days, representing the compressive strength values after the given number of hours or days, respectively. In the Figures:
- Figure 1 shows the compressive strength as a function of time for the mortar composition as provided for the examples and counter example in Table 4,
- Figure 2 shows the dimensional length change of mortar beams stored in water as a function of time for the examples and counter example in Table 4,
- Figure 3 shows the compressive strength as a function of time for the mortar composition as provided for the examples and counter example in Table 5,
- Figure 4 shows the dimensional length change of mortar beams stored in water as a function of time for the examples and counter example in Table 5,
- Figure 5 shows the compressive strength as a function of time for the mortar composition as provided for the examples and counter example in Table 6,
- Figure 6 shows the dimensional length change of mortar beams stored in water as a function of time for the examples and counter example in Table 6,
- Figure 7 shows the Vicat measured setting time for the example and counter-example compositions given in Table 6,
- Figure 8 shows the slump flow values obtained for the example and counter-example compositions given in Table 6,
- Figure 9 shows the compressive strength as a function of time for the mortar composition as provided for the examples and counter example in Table 7, and
- Figure 10 shows the dimensional length change of mortar beams stored in water as a function of time for the examples and counter example in Table 7,
- Figure 11 shows the dimensional length change of mortar beams stored in water as a function of time for the examples and counter example in Table 8.

### Detailed description of the invention

The present invention will be described with respect to particular embodiments and with reference to certain drawings, but the invention is not limited thereto but only by the claims.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some, but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

For the purposes of the invention, the term "comprising" is intended to include the narrower term "consisting of", but not to be synonymous therewith. It is moreover intended that the sum of the percentages of the specified constituents of the composition of the invention is always 100% or can be adjusted to 100% in case of small errors. This is particularly true for the sum of the components (A) + (B) + (C) + (D), in which case water (E) is excluded from calculation.

For the purpose of the invention, the term "slag" refers herein to a waste material produced during the smelting or refining of metals, which typically occurs by reaction of a flux with impurities.

For the purpose of the invention, the term "cement" refers herein to a substance made for use in mortar or concrete. The term can refer to ordinary Portland cement (OPC). The term "alkali-activated cement" refers to an alternative for OPC, and typically refers to a binder comprising a precursor and an alkali activator.

For the purpose of the invention, the term "d_50" refers herein to a mass-median-diameter, considered to be the average particle size by mass. D_50 may be measured by experimental techniques such as laser diffraction.

For the purpose of the invention the term "Binder" or "Inorganic binder composition" refers to a combination of compounds or materials plus water, that hardens like OPC.

### Residues

An important aspect of the invention is the clear distinction between the various slags produced during iron- and steelmaking. All these slags have different chemistry and mineralogy and hence different hydraulic behaviour. The different slags which are encountered are clearly described below:
- Primarily, in the first stage of iron and steel making, iron ore and cokes are processed in the blast furnace. In this stage pig iron is made and the slag produced during the blast furnace operations is known as blast furnace slag (BFS). Commonly the BFS is granulated with water or air resulting in a significant amount of amorphous phases and little to no Ca-Al rich phases. Moreover, the chemistry of this slag is particular richer in SiO₂-content. The use of milled granulated BFS as supplementary cementitious material (SCM) is well-known in the field.
- In a second step, the iron is converted into steel. This can be done during a convertor process such as Linz-Donawitz (LD) steelmaking process or Gilchrist-Thomas-converter process. The slag produced during this LD-process, convertor slag, also known as basic oxygen furnace (BOF) slag. The term 'Steel slag' in literature refers mostly to the slag produced during these processes. In particular the convertor slags' chemistry has a lower Al₂O₃-content which results in the absences of any Ca-Al rich phases, but a higher Fe-oxide content which results in the presence of Ca-Fe-phases.
- Thirdly, ladle furnace slag or ladle furnace slag (LFS) is slag coming from secondary processes. It is one of the so-called secondary metallurgical slags (SMS), which are generated during the production and refinement of specific alloys such as high-quality steels and stainless steels by secondary metallurgical processes. The steel processed in e.g. basic oxygen furnaces (BOFs) and electric arc furnaces is treated in a ladle furnace to achieve the required chemical composition and temperatures appropriate for casting. For this purpose, different processes are applied, thus generating different types of slag. (Euroslag, 2019). Ladle slag or ladle furnace slag is produced during the production of, amongst other metals and alloys, steel and stainless steel. This slag has in comparison to the previous two slags a high Al₂O₃ content
- Other type of slag is produced during the operations of the electric arc furnace (EAF) which is used to melt steel scrap or direct reduced iron (DRI) can be produced during the steelmaking operations. Similarly, theses EAF slags' chemistry and mineralogy are different than the ladle furnace slags used in this invention and therefore have a different reactivity.
- Another type of SMS is the slag produced during the Argon oxygen decarburization (AOD) process. This process is mainly used to purify stainless steel.

The ladle furnace slag comprises, in terms of chemical composition, at least 25 wt% of CaO. Preferably, the ladle furnace slag comprises at least 30 wt% of CaO, more preferably at least 35 wt% of CaO.

The ladle furnace slag comprises, in terms of chemical composition, at least 10 wt% of Al₂O₃. Preferably, the ladle furnace slag comprises at least 15 wt% of Al₂O₃, more preferably at least 20 wt%.

Preferably, the combined fraction of CaO and Al₂O₃, in terms of chemical composition, is at least 40 wt%, preferably 50 wt%, more preferably 60 wt%.

The weight ratio of Al₂O₃/CaO is at least 0.25. Preferably the weight ratio of Al₂O₃/CaO is in the range from 0.25 to 4, more preferably from 0.3 to 3, even more preferably from 0.4 to 2, still more preferably from 0.5 to 1.

Preferably, the chemistry of the ladle furnace slag comprises iron oxides, preferably in the range from 1 wt% to 60 wt% calculated as FezOs. More preferably, the Fe₂O₃ in the ladle furnace slag is in the range from 5 wt% to 40 wt%. Preferably, the SiO₂-content is less than 20 wt%, even more preferably less than 15 wt%.

It should be noted that the interest in this invention is towards the crystalline phases. Preferably, in terms of mineralogic composition, the ladle furnace slag comprises less than 70 wt% of amorphous content, more preferably less than 60 wt%, even more preferably less than 50 wt%, still more preferably less than 40 wt%, more preferably less than 30 wt%. Therefore, it is preferred that the amount of glassy, amorphous materials is limited. The mineralogic constituents are determined by X-ray diffraction (XRD) and quantified via the Rietveld refinement method.

Examples of the chemical composition of ladle furnace slag are shown in Table 1. The values of the chemical composition are determined by X-ray fluorescence (XRF).

Preferably, in terms of mineralogic composition, the sum of dicalcium-silicate phases (C2S-polymorphs) in the ladle furnace slag is comprised between 5 wt% and 35 wt%, more preferably between 15 wt% and 25 wt%.

The ladle furnace slag comprises at least one of the following CaO-Al₂O₃ mineralogic phases: C3A: 3CaO.Al₂O₃, C12A7: 12CaO.7Al₂O₃, CA: CaO.Al₂O₃, CA2: CaO.2Al₂O₃, CA6: CaO.6Al₂O₃. Preferably, in terms of mineralogic composition, the sum of CaO-Al₂O₃ phases (3CaO.Al₂O₃, CaO.Al₂O₃, 12CaO.7Al₂O₃, CaO.2Al₂O₃, CaO.6 Al₂O₃) is more than 5 wt%, more preferably more than 15 wt%.

Preferably, the content of Mayenite (C12A7: 12CaO.7Al₂O₃) in the ladle furnace slag is more than 5 wt%, more preferably more than 10 wt%.

Preferably, the content of hydrate CaO-Al₂O₃-containing phases in the ladle furnace slag, such as garnet i.e. katoite, is more than 5 wt%, more preferably is more than 10 wt%.

Preferably, the maximal metallic content in the ladle furnace slag is less than 5 wt%, more preferably less than 3 wt%, even more preferably less than 1 wt%. Some examples of mineral composition are shown in Table 2.

Fillers are defined as fine particulate materials that can be inert or almost chemically inert when mixed with cement, produced by grinding with or without surface treatment. Filler particles can be characterized following the EN 12620, this European Standard specifies the properties of aggregates and filler aggregates obtained by processing natural, manufactured or recycled materials and mixtures of these aggregates. Inert fillers can be ground limestone, ground dolomite, ground quartz, ground glass mine tailings or milled bricks.

Apart from inert materials also other fine, low reactive materials such as other slags and ashes can be used as filler materials in the presented invention. In particular, ground BOF slag (basic oxygen furnace slag), ground BFS, ground bottom ashes or fly ashes are also suitable as fillers in the present invention.

Cement-types such as OPC, calcium sulfoaluminate cement, calcium aluminate cement, lime and hydrated lime are not considered filler materials in this invention. Cements are excluded from the list of fillers.

Fillers are characterized as the finest fraction in the particle packing in mortar or concrete applications. One particular way to characterize them is by defining their particle size distribution.

A characteristic value can be defined as, d_50 corresponding to median size of the granulometric distribution of material's particles.

Other characteristic values are:
- d_max corresponding to the maximum particle size,
- d_10 corresponding to the maximum size of the 10% smallest particles, which means 90% of the number of particles are larger than this value,
- d_90 corresponding to the maximum size of the 90% smallest particles, which means 10% of the number of particles are larger than this value.
The values of the filler used in the described examples are given in Table 3.

### Binder

As mentioned above, the present invention provides an inorganic binder composition comprising (A) a ladle furnace slag chemically comprising at least 25 wt% of CaO, at least 10 wt% of Al₂O₃, and a maximum of 25 wt% of SiOz, (B) a CaSO₄-source different from (A), (C) a retarding compound different from (A) and (B), (D) a filler with a d_50 value between 1 µm and 25 µm, different from (A), (B) and (C), and (E) water, wherein the ladle furnace slag is at least 15 wt% of the sum of (A)+ (B)+ (C) + (D), the weight ratio between the ladle furnace slag and the CaSO₄-source being in the range from 1:3 to 19:1, the weight ratio between the sum of the ladle furnace slag, the CaSO₄-source and the filler, i.e. ((A) + (B) + (D)), and the retarding compound (C) is at least 19:1, the filler being present as at least 10 wt% of the binder composition and at a maximum of 70 wt%, and the ratio of water to the sum of (A), (B), (C) and (D), i.e. the water to binder ratio (w/b), is limited to 0.40.

Of course, the constituents of the inorganic binder composition of the invention may be held available in separate portions, i.e. as a kit of parts. It is possible to store the ladle furnace slag (A) separately from the other components, the latter ones being present separately or combined. Moreover, it is possible to store a mixture of the ladle furnace slag (A) with the CaSO₄-source (B), the retarders (C) and/or the filler (D) and to store the missing part(s) of the composition in any combination or separately. One could also store a blend of (A), (B), (C) and (D) and mix with water (E) subsequently. All parts should be combined before use.

The ladle furnace slag has been described extensively in a previous section of the description. The ladle furnace slag is at least 15 wt% of the binding compound, preferably at least 20 wt%, more preferably at least 25 wt%.

Preferably, the ladle furnace slag is milled into a powder with a particle size distribution d_50 smaller than 63 µm. Preferably, the milling is performed prior to said combination with the CaSO₄-source, the retarder, and/or filler. More preferably, the ladle furnace slag is milled into a powder with a particle size distribution d_50 smaller than 25 µm, more preferably smaller than 15 µm.

The ladle furnace slag is combined with a CaSO₄ source. Still more preferably, the CaSO₄-source comprises one or more of the following: CaSO₄ (anhydrite), CaSO₄ (anhydrite), alfa-CaSO₄.½H₂O (alfa hemi-hydrate), beta-CaSO₄.½H₂O (beta hemi-hydrate), CaSO_{4.2}H₂O (gypsum), phosphogypsum, SOs-scrubber gypsum, blend material containing CaO or Ca(OH)₂ and Na₂SO₄.

The source of CaSO₄ can be natural or synthetic such as flue gas desulferisation (FGD) gypsum.

The source of CaSO₄ is combined with the ladle furnace slag. The combination of ladle furnace slag and CaSO₄ with water results in the formation of an ettringite-based composition.

The weight ratio between the said ladle slag and said CaSO₄-source is in the range from 1:3 to 19:1, more preferably from 1:1 to 9:1, still more preferably from 2:1 to 5:1.

As mentioned before in the description, the ladle furnace slag is combined with a retarding compound. More preferably, the ladle furnace slag is combined with a retarder after the residue has already been combined with the CaSO₄-source.

A retarding compound is chosen from a list of, or is a combination of, conventional retarders for CA-cements such as a boron-containing salt, a carboxylic acid or a salt thereof, a sugar, an amine, alkali-carbonates, a lignin-derivate, a phosphate or a phosphonate. Preferably, the boron-containing salt is borax.

More preferably, a carboxylic acid is based on citric acid, tartaric acid, maleic acid, oxalic acid, ethylenediamine tetraacetic acid (EDTA) or gluconic acid. Still preferably, the lignin-derivate is lignosulfonate.

The weight ratio between the sum of the ladle furnace slag, CaSO₄-source and filler and the retarding compounds is at least 19:1, preferably between 25:1 and 10000:1, more preferably between 50:1 and 5000:1, still preferably between 100:1 and 3000:1, preferably between 200:1 and 2000:1.

The filler fraction is present as at least 10 wt% of the binding compound, more preferably at least 20 wt% of the binding compound, more preferably at least 30 wt% of the binding compound.

The filler fraction in the binder composition is limited to 70 wt% of the binder composition, more preferably is limited to 65 wt% of the binder composition, more preferably to 60 wt% of the binder composition.

The filler fraction of the inorganic binder composition has a d_50 of maximum 25 µm, more preferably a d_50 of maximum 20 µm, more preferably a d_50 of maximum 15 µm.

The filler fraction of the binder composition has a d_50 of at least 1 µm, more preferably a d_50 of at least 2 µm, even more preferably a d_50 of at least 3 µm.

The binder composition can comprise a flow improving agent. The flow improving agent can be present between 0.05 wt% to 2 wt% of the binding compound.

The flow improving agent can be chosen from a list of conventional flow improvers preferably one of a naphthalene-based superplasticizer; a lignosulphonate; a protein, such as casein; a naphtalene sulphonate; a melamine-based superplasticizer; a polycarboxylic ether (PCE), polyacrylic ether or a polyaromatic ether (both called PAE), a salt or derivative thereof; and mixtures thereof.

In order to facilitate a durable binder, the inorganic binder composition contains water. In this invention the ratio of water (E) to the sum of (A), (B), (C) and (D), i.e. the water to binder ratio (w/b), is limited to 0.40, preferably to 0.35, more preferably to 0.30, even more preferably to 0.25.

Still preferably, the inorganic binder composition can be combined with aggregates to form a mortar or concrete.

As mentioned above, the present invention provides a process for producing that inorganic binder composition, comprising the steps of (A) providing a ladle furnace slag, (B) providing a CaSO₄ source different from (A), (C) providing a retarding compound different from (A) and (B), (D) providing a filler with a d_50 value between 1 µm and 25 µm, different from (A), (B) and (C), providing water, homogeneously mixing the ladle furnace slag, the CaSO₄ source, the retarding compound, the filler and the water. The term "homogeneously mixing" has been explained in the description above.

Finally, as mentioned above, the present invention provides for the use of that inorganic binder composition, comprising combining the inorganic binder composition with aggregates to form a building product.

### Experimental methods

- The chemistry of the inorganic compounds is quantified via X-ray fluorescence (XRF) using the XRF S4 Pioneer (Bruker).
- The mineralogy is of the inorganic compounds is determined via X-ray diffraction (XRD) using the D8 Advance (Bruker). The quantification is done using the Rietveld refinement method.
- The reported loss-on-ignition (LOI) is determined on dry, de-metallized material at 950°C.
- The reported values for particle size distribution (PSD) are based on measurements using the LS 13 320 Particle Size Analyzer (Beckman-Coulter).
- Compressive strength of the binder is measured on mortar level using beams produced in line with the EN 196-1 procedure with the composition as given in Tables mentioned below.
- The setting time is measured using the Vicat-needle test where the procedure is followed in line with the EN 196-3.
- The slump flow is measured by filling a tube with diameter of 2 cm and height of 5 cm with the mixed mortar composition. The diameter of the mortar after lifting the tube is taken as characteristic value for the flow.

### Experimental Results

The invention will be now described in more details with reference to the following examples, whose purpose is merely illustrative and not intended to limit the scope of the invention. In the Tables and the Figures, the units are given in grams or wt%, respectively.

**Table 1: Ladle slag chemistry**

| **Compound** | *Ladle Slag 1 (wt%)* | *Ladle Slag 2 (wt%)* |
|---|---|---|
| CaO | 41.1 | 44.2 |
| Al₂O₃ | 23.2 | 25.8 |
| SiO₂ | 8.5 | 11.5 |
| MgO | 6.4 | 6.7 |
| Fe₂O₃ | 9.8 | 4.8 |
| MnO | 2.5 | 1.9 |
| TiO₂ | 0.5 | 0.4 |
| V₂O₃ | 0.3 | 0.3 |
| Others | 2.7 | 1.9 |
| *Loss on Ignition* | 4.4 | 2.5 |

**Table 2: Mineralogy of used ladle slags**

| **Mineral** | **Ladle Slag 1 (wt%)** | **Ladle Slag 2 (wt%)** |
|---|---|---|
| Quartz (SiO₂) | 5 | |
| Di-calcium silicate (C2S) | 26 | 26 |
| Garnet (X₃Z₂(SiO₄)₃) | 24 | 9 |
| Melilite group ((Ca,Na)₂(Al,Mg,Fe²⁺)(Si,Al)₂O₇) | 6 | 38 |
| Calcite (CaCO₃) | 2 | |
| Periclase (MgO) | 7 | |
| Mayenite (Ca₁₂Al₁₄O₃₃ - C12A7) | 13 | 21 |
| Srebrodolskite ( Ca₂Fe³⁺₂O₅) | 7 | |
| Wuestite (FeO) | 6 | |
| Hematite (Fe₂O₃) | 4 | |
| CaAl₂O₄(CA) | | |
| Ca₃Al₂O₆ (C3A) | | 4 |
| Brownmillerite. (Ca₂(Al,Fe)₂O₅ - C4AF) | | |
| Amorphous | | 2 |
| Others | 4 | |

**Table 3: Particle size values used for the fillers in the examples.**

| | d_10 | d_50 | d_90 |
|---|---|---|---|
| Limestone Filler | 1.23 | 8.95 | 63.28 |
| Dolomite Filler | 0.78 | 2.21 | 12.58 |
| Quartz Filler | 2.85 | 12.58 | 25.28 |
| Ground BFS | 1.03 | 8.86 | 28.32 |
| Ground BOF | 1.34 | 20.27 | 124.86 |
| Ground Bottom Ash | 0.89 | 9.63 | 51.20 |
| Ground AOD slag | 1.05 | 9.28 | 93.25 |

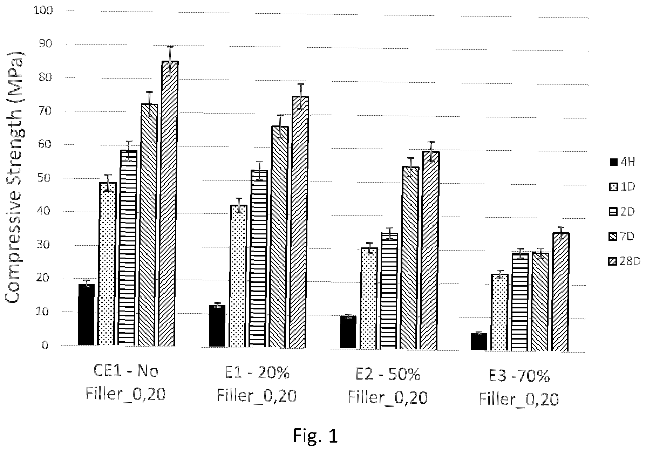

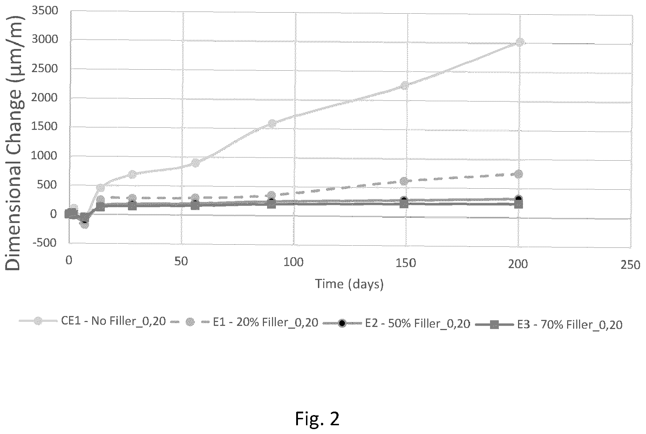

In Table 4, the composition is given for different dolomite filler ranges in comparison to the binder composition without filler. The compressive strength values for these compositions as function of time are given in Figure 1. The addition of filler lowers the compressive strength but still a good mechanical performance is obtained. In Figure 2, the dimensional stability of mortar beams when stored in water is shown for these examples. The change in length is a measure for the stability of the beam. In order to be useful, the beam should have a limited amount of expansion when stored underwater. From this example it can be clearly noticed that the absences of filler, despite the excellent strength, gives rise to unacceptable expansion of the binder. The replacement of part of the binder composition results in a strong reduction of the expansion to more conventional levels where a value of < 0.1% ( = 1000µm/m) is targeted. It is believed that the positive effect on dimensional stability completely outweighs the negative effect on compressive strength.

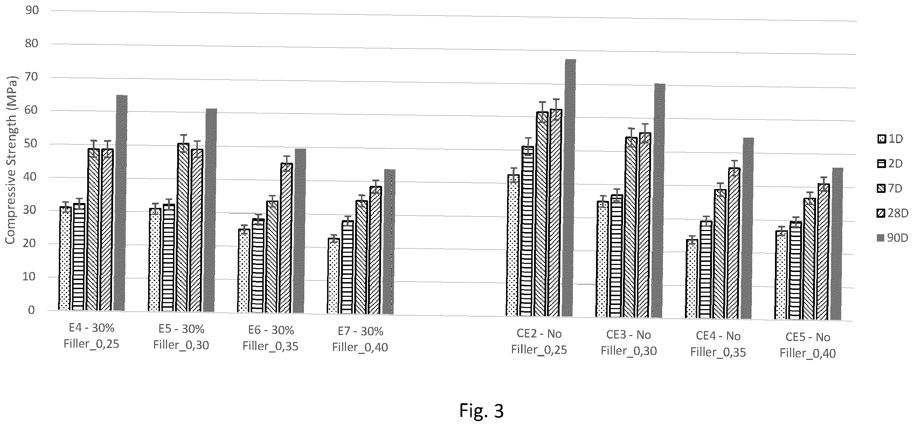

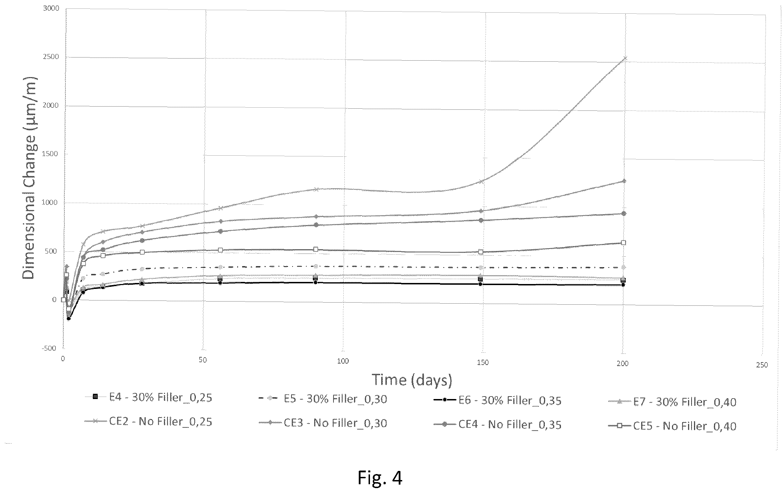

In Table 5, the composition is given for an experiment with varying w/b ratio (indicated as a rational number only) for 30 wt% filler compared to no filler as counter examples (CE2-CE5). The ratio between the slag and CaSO₄ is fixed to 3:1 for all samples. In Figure 3 the compressive strength values are given. It is clear that the increase of the w/b results in a lower strength in line with the conventional cement and concrete rule of thumb. In Figure 4 the dimensional stability of the binder in water is illustrated. The effect of the w/b as well as the presence of the filler material can clearly be noticed. The addition of the filler lowers significantly the expansion and strongly improves the water stability. The effect is most pronounced at lower water w/b levels. It is believed that the positive effect on dimensional stability completely outweighs the negative effect on compressive strength.

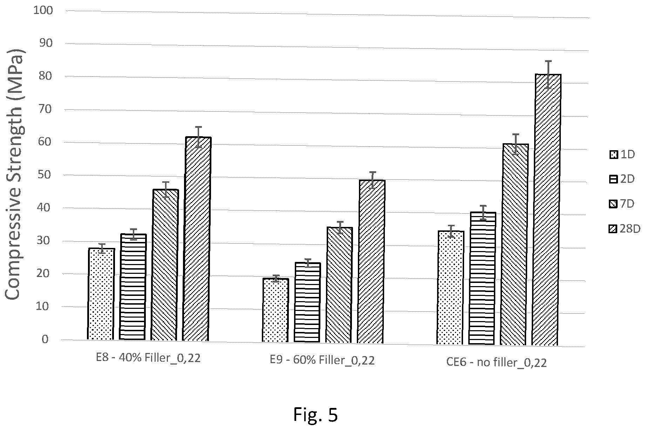

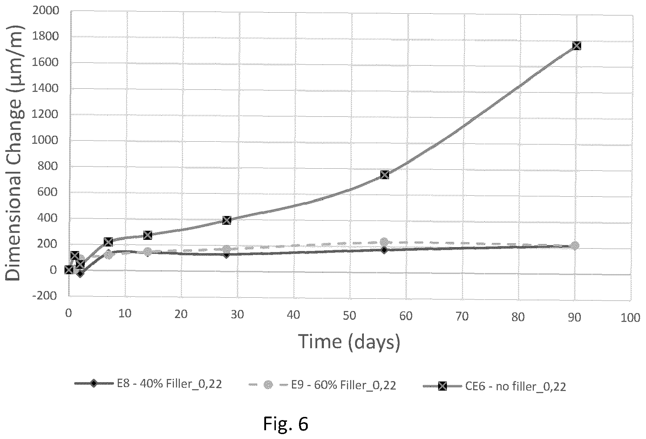

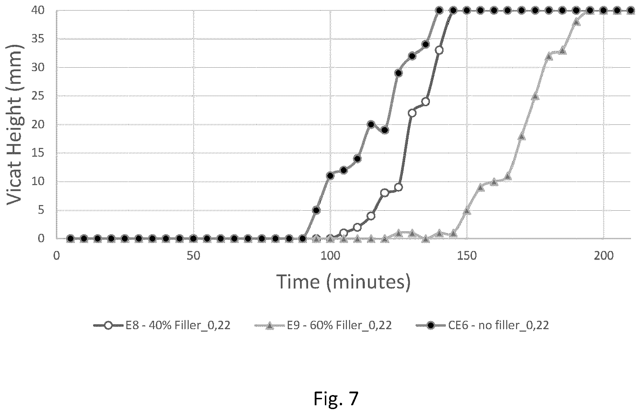

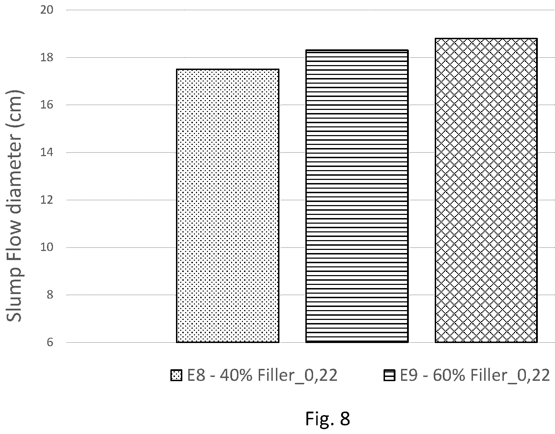

In Table 6, the compositions are given for E8 and E9 with 40 wt% and 60 wt% filler as well as a counter example without filler. The w/b ratio is indicated as a rational number only. The strength and water stability are presented in Figure 5 and Figure 6 respectively. Moreover, it demonstrates the effect of the required amount of retarder and hence flow improving agent i.e. superplasticizer to obtain a similar flow. The use of fillers facilitates a lower amount of retarder and superplasticizer. The setting time and slump flow values are given in Figure 7 and Figure 8. Again, it is believed that the positive effect on dimensional stability completely outweighs the negative effect on compressive strength.

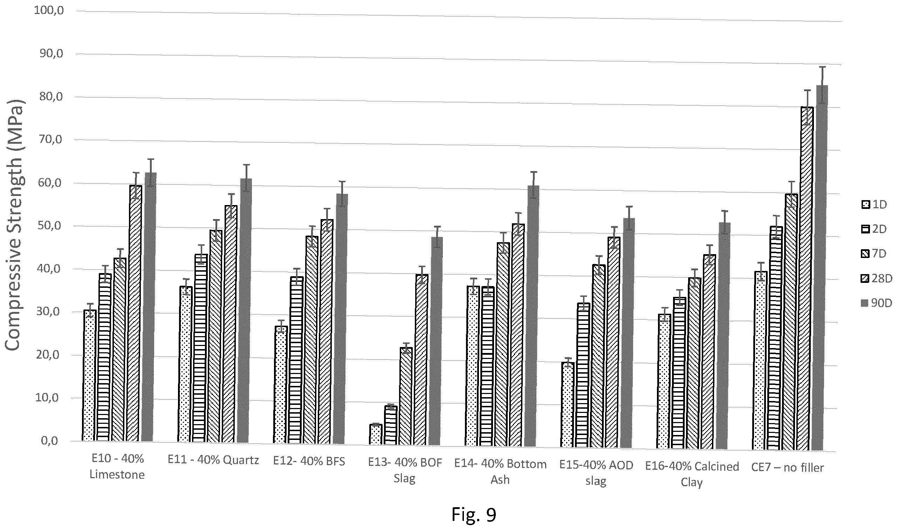

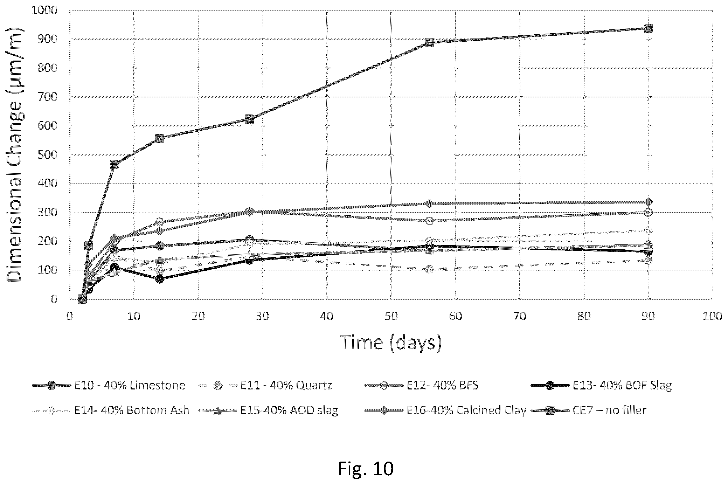

In Table 7 the compositions are given for various types of filler as 40 wt% to the binder composition and compared to the case without filler. The compressive strength as function of time is given in Figure 9 and the effect on the water stability is given in Figure 10. This clearly shows that the invention can be used with a variety in filler types to improve the water stability in comparison to the absence of filler.

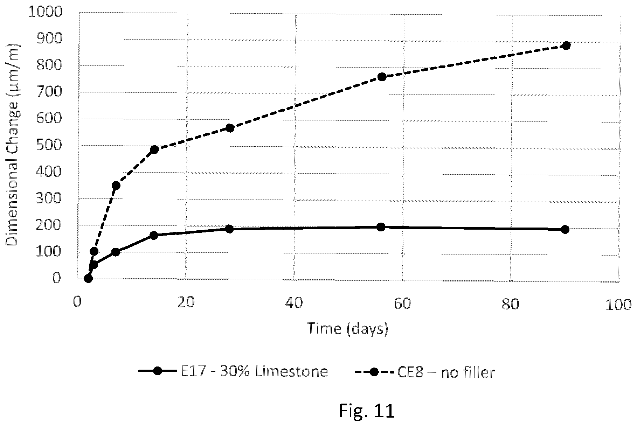

In Table 8 the compositions are given for a binder composition with 30% filler and w/b = 0.30. The water stability is compared to the case without filler in Figure 11. This example demonstrates the benefit of the filler in terms of water stability even when no flow improving agent is present. It facilitates the production of building products where no flow is required.

**Table 4: Counter example and example compositions for various filler contents.**

| | CE1 - No filler | E1 20% Filler | E2 50% Filler | E3 70% Filler |
|---|---|---|---|---|
| Ladle Slag 1 | 700 | 560 | 350 | 210 |
| Dolomite filler | | 200 | 500 | 700 |
| CaSO4.1/2H2O | 150 | 120 | 75 | 45 |
| CaSO4 | 150 | 120 | 75 | 45 |
| Tartaric Acid | 3 | 2,5 | 1,8 | 1,2 |
| Sodium Gluconate | 3 | 2,5 | 1,8 | 1,2 |
| Water | 201,4 | 201,4 | 201,1 | 200,9 |
| Sand 0-3 | 1000 | 1000 | 1000 | 1000 |
| Superplasticizer | 2 | 2 | 2 | 2 |

**Table 5: Counter example and example compositions for 30 wt% filler for varying w/b-content.**

| | **E4** - **30% Filler_0,25** | **E5 - 30% Filler_0,30** | **E6 - 30% Filler_0,35** | **E7 - 30% Filler_0,40** | **CE2 - No Filler_0,25** | **CE3 - No Filler_0,30** | **CE4 - No Filler_0,35** | **CE5 - No Filler_0,40** |
|---|---|---|---|---|---|---|---|---|
| Ladle Slag 2 | 525 | 525 | 525 | 210 | 750 | 750 | 750 | 750 |
| Limestone Filler | 300 | 300 | 300 | 700 | 0 | 0 | 0 | 0 |
| CaSO4.1/2H2O | 131,25 | 131,25 | 131,25 | 45 | 187,5 | 187,5 | 187,5 | 187,5 |
| CaSO4 | 43,75 | 43,75 | 43,75 | 45 | 62,5 | 62,5 | 62,5 | 62,5 |
| Citric Acid | 4 | 4 | 4 | 4 | 5 | 5 | 5 | 5 |
| Borax | 4 | 4 | 4 | 4 | 5 | 5 | 5 | 5 |
| Water | 253 | 303,3 | 353,7 | 404,2 | 253 | 303,3 | 353,7 | 404,2 |
| Sand 0-3 | 1000 | 1000 | 1000 | 1000 | 1000 | 1000 | 1000 | 1000 |
| Superplasticizer | 1,8 | 0,8 | 0,4 | 0,4 | 2 | 1 | 0,5 | 0,5 |

**Table 6: Counter example and example compositions with different retarder content and superplasticizer.**

| | **E8 - 40% Filler_0,22** | **E9 - 60% Filler_0,22** | **CE6** - **no filler_0,22** |
|---|---|---|---|
| Ladle Slag 1 | 402 | 268 | 670 |
| Limestone Filler | 400 | 600 | 0 |
| CaSO₄ | 198 | 132 | 330 |
| Tartaric Acid | 3 | 2 | 4 |
| EDTA | 3 | 2 | 4 |
| Water | 221,5 | 221,0 | 222,2 |
| Sand 0-3 | 1000 | 1000 | 1000 |
| Superplasticizer | 1 | 0,75 | 2 |

**Table 7: Counter example and example compositions for 40 wt% filler of different origin.**

| | **E10 - 40% Limestone** | **E11 - 40% Quartz** | **E12- 40% BFS** | **E13- 40% BOF Slag** | **E14- 40% Bottom Ash** | **E15-40% AOD slag** | **E16-40% Calcined Clay** | **CE7 - no filler** |
|---|---|---|---|---|---|---|---|---|
| Ladle Slag 1 | 420 | 420 | 420 | 420 | 420 | 0 | 0 | 700 |
| Limestone Filler | 400 | 0 | 0 | 0 | 0 | 0 | 0 | 0 |
| Ground Quartz | 0 | 400 | 0 | 0 | 0 | 0 | 0 | 0 |
| Ground BFS | 0 | 0 | 400 | 0 | 0 | 0 | 0 | 0 |
| Ground BOF slag | 0 | 0 | 0 | 400 | 0 | 0 | 0 | 0 |
| Ground Bottom Ash | 0 | 0 | 0 | 0 | 400 | 0 | 0 | 0 |
| Ground AOD slag | 0 | 0 | 0 | 0 | 0 | 400 | 0 | 0 |
| Calcined Clay | 0 | 0 | 0 | 0 | 0 | 0 | 400 | 0 |
| CaSO4.1/2H2O | 90 | 90 | 90 | 90 | 90 | 90 | 90 | 150 |
| CaSO₄ | 90 | 90 | 90 | 90 | 90 | 90 | 90 | 150 |
| Tartaric Acid | 2,5 | 2,5 | 2,5 | 2,5 | 2,5 | 2,5 | 2,5 | 2,5 |
| Sodium Gluconate | 2,5 | 2,5 | 2,5 | 2,5 | 2,5 | 2,5 | 2,5 | 2,5 |
| Water | 251,5 | 251,5 | 251,5 | 251,5 | 251,5 | 251,5 | 251,5 | 251,5 |
| Sand 0-1 | 1000 | 1000 | 1000 | 1000 | 1000 | 1000 | 1000 | 1000 |
| Superplasticizer | 1 | 1 | 1 | 1 | 1 | 1 | 1 | 1 |

**Table 8: Counter example and example compositions without flow improving agent.**

| | **E17 - 30% Filler_0,30** | **CE8 - no filler_0.30** |
|---|---|---|
| Ladle Furnace Slag 1 | 525 | 750 |
| Limestone Filler | 300 | 0 |
| CaSO₄ | 172 | 247 |
| Tartaric Acid | 3 | 3 |
| Water | 300 | 300 |
| Sand 0-3 | 1000 | 1000 |

## Claims

1. An inorganic binder composition comprising:
(A) a ladle furnace slag chemically comprising: at least 25 wt% of CaO, at least 10 wt% of Al₂O₃, and a maximum of 25wt% of SiO₂,
(B) a CaSO₄ source, different from (A),
(C) a retarding compound, different from (A) and (B),
(D) a filler with a d_50 value between 1 µm and 25 µm, different from (A), (B) and (C),
(E) water
wherein:
- (A) the ladle furnace slag is at least 15 wt% of the sum of (A)+ (B)+ (C) + (D),
- the weight ratio between (A) the ladle furnace slag and (B) the CaSO₄ source is in the range from 1:3 to 19:1,
- the weight ratio between the sum of the ladle furnace slag, the CaSO₄ source and the filler ((A) + (B) + (D)) and the retarding compound (C) is at least 19:1,
- the filler (D) is present as at least 10 wt% of the binder composition and at a maximum of 70 wt%,
- The ratio of (E) water to the sum of (A), (B), (C) and (D), is limited to 0.40.

2. Inorganic binder composition according to claim 1, wherein the ladle furnace slag comprises less than 70 wt% of amorphous constituents.

3. Inorganic binder composition according to any of the preceding claims, wherein the ladle furnace slag comprises at least one of the following CaO-Al₂O₃ mineralogic phases:
• C3A: 3CaO.Al₂O₃,
• C12A7: 12CaO.7Al₂O₃,
• CA: CaO.Al₂O₃,
• CA2: CaO.2Al₂O₃,
• CA6: CaO.6Al₂O₃.

4. Inorganic binder composition according to any of the preceding claims, wherein the ladle furnace slag comprises at least 5 wt% of CaO-Al₂O₃ phases.

5. Inorganic binder composition according to any of the preceding claims, wherein said ladle furnace slag having a weight ratio of Al₂O₃/CaO of at least 0.25.

6. Inorganic binder composition according to any of the preceding claims, additionally comprising a flow improving agent which comprises one or more of the following:
• a naphthalene-based superplasticizer,
• a lignosulphonate,
• a protein,
• a melamine-based superplasticizer,
• a polycarboxylic ether,
• a polyacrylic ether,
• a polyaromatic ether,
or a salt or derivative of one of the above-mentioned compounds, and mixtures thereof.

7. Inorganic binder composition according to any of the preceding claims, wherein said filler comprises one or more of the following:
• Ground Quartz,
• Ground Dolomite,
• Ground Limestone,
• Mine tailings,
• Ground Metallurgical Residues,
• Ground Glass.

8. Inorganic binder composition according to any of the preceding claims, wherein the CaSO₄ source comprises at least one of the following:
- CaSO₄ (anhydrite),
- alfa-CaSO₄.½H₂O (alfa hemi-hydrate),
- beta-CaSO₄.½H₂O (beta hemi-hydrate),
- CaSO₄.2H₂O (gypsum),
- phosphogypsum,
- SOa-scrubber gypsum
- a blend material containing CaO or Ca(OH)₂ and Na₂SO₄.

9. Inorganic binder composition according to any of the preceding claims, wherein the blend of retarding compounds comprises one or more of the following:
- a boron-containing salt,
- a carboxylic acid or a salt thereof,
- a phosphonate,
- a sugar,
- a lignin-derivate,
- an amine,
- an alkali-carbonate,
- a phosphate.

10. Inorganic binder composition according to claim 9 wherein the carboxylic acid is one of the following: citric acid, tartaric acid, maleic acid, oxalic acid, ethylenediamine tetraacetic acid or gluconic acid.

11. Inorganic binder composition according to any of the preceding claims, comprising a milled said ladle furnace slag with a particle size distribution d_50 smaller than 63 µm.

12. A process for producing an inorganic binder composition according to any of the preceding claims, comprising the steps of:
- (A) Providing a ladle furnace slag,
- (B) Providing a CaSO₄ source, different from (A),
- (C) Providing a retarding compound, different from (A) and (B),
- (D) Providing a filler with a d_50 value between 1 µm and 25 µm, different from (A), (B) and (C),
- (E) Providing water,
- Homogeneously mixing the ladle furnace slag, the CaSO₄ source, the retarding compound, the filler, and the water.

13. Use of the inorganic binder composition according to claims 1 to 11, comprising combining the inorganic binder composition with aggregates to form a building product.
